# EUROPEAN PATENT APPLICATION

(11) **EP 3 769 619 A1**
(43) Date of publication of application: **27.01.2021**
(21) Application number: 20187151.4
(22) Date of filing: 22.07.2020
(51) Int. Cl.: A01N 25/02, A01N 37/02, A01N 43/78, A01N 55/08, A01N 59/14, A01P 21/00

(54) **COMPOSITION FOR GROWING OLIVES**

(30) Priority: 22.07.2019 IT 201900012531
(71) Applicant: Aprile, Sergio, 53031 Casole d'Elsa (IT)
(72) Inventor: Aprile, Sergio, 53031 Casole d'Elsa (IT)
(74) Representative: Masala, Gian Tomaso

(57) **Abstract**

The present invention concerns a composition that enables ovarian abortion phenomena to be significantly reduced in olive tree plants and a treatment method of at least one olive tree plant that comprises the administration of said composition.

## Description

### FIELD OF THE INVENTION

The present invention concerns a composition that enables ovarian abortion phenomena in olive tree plants to be significantly reduced and a treatment method of at least one olive tree plant that comprises the administration of said composition.

### STATE OF THE ART

The olive tree plant (Olea europaea L., 1753) is a fruit tree used since ancient times for food purposes. The olives, its fruits, are used for the extraction of olive oil and, to a lesser extent, for direct use for eating.

The olive tree plant is an evergreen broad-leaved tree, whose vegetative activity is almost continuous, with attenuation in the winter period. The olive tree has a cylindrical and twisted trunk, with grey or dark grey coloured bark and hard and heavy wood and conical shaped foliage, with fruit bearing boughs and pendulous or lateral branches (arranged horizontally with respect to the trunk) according to the variety. The flowers are grouped into numbers of 10-15 in bunches of inflorescences, called "blossom", produced by the axils of the leaves of the last year's sprigs, whereas the fruit is a spherical, helix or oval-shaped drupe, sometimes asymmetrical, formed by a "meaty" part (pulp) which contains oil and a woody or wrinkled stone.

As for all living organisms, the life cycle of the olive tree plant can be split into different stages (known as phenological stages) identified by a morphological, physiological, functional and behavioural status induced by the seasonal mutation of the environmental conditions, in particular the climatic ones. For olive tree plants, the life cycle is conventionally divided into the following phenological stages:
- Vegetative rest;
- Flower differentiation;
- Vegetative awakening;
- Inflorescence;
- Flowering;
- Bud setting;
- First fruit growth;
- Hardening of the stone;
- Second fruit growth;
- Ripening; and
- Complete maturation;
as reported, for example, in "Olea, Trattato di olivicoltura" by Piero Fiorino, Edagricole, 2003.

Although the growing of olive tree plants is widespread and has been studied since ancient times, the Applicant has noted that their productivity is limited by a natural phenomenon, known as ovarian abortion meaning the presence, during the phenological stage of flowering, of flowers with absent or partially developed ovaries and however not functional, which cannot transform into fruits and are destined not to contribute to the production of olives, and therefore of oil.

The Applicant has also observed that, although this phenomenon varies from year to year, and from variety to variety, ovarian abortion inevitably poses a limit on the quantity of olives, and therefore also of oil, that can be obtained from an olive tree plant. This inevitably implies the need to have, for the same amount of oil produced, larger olive groves and therefore larger investments for the grower.

The Applicant has also noted that, although there are different fertilizing products on the market, adapted to contribute nutritional substances, or phytosanitary products, adapted to protect and preserve the plant (or its products) or influence the vital processes (growth, etc.), there is still a need for new products able to significantly increase the productivity of the olive tree plants, reducing the phenomenon of ovarian abortion.

A first aim of the present invention is therefore to improve the productivity of the olive tree plants, significantly reducing the phenomenon of ovarian abortion.

### SUMMARY OF THE INVENTION

According to the present invention, the Applicant has surprisingly found that these desired characteristics can be achieved through a new composition which, by combining four components in a specific and innovative way, when administered to an olive tree plant, enables the phenomenon of ovarian abortion to be significantly reduced and thus productivity to be increased.

Therefore, the present invention relates in a first aspect thereof to a composition comprising alpha-naphthylacetic acid, N-acetyl thiazolidine-4-carboxylic acid, thiazolidine-4-carboxylic acid, and at least one boron source.

In fact, it has surprisingly been discovered that by providing such a composition, in which a specific combination of components, i.e. alpha-naphthylacetic acid, N-acetyl thiazolidine-4-carboxylic acid, thiazolidine-4-carboxylic acid, and at least one boron source, it is possible to reduce and/or resolve the drawbacks mentioned above. The Applicant has in particular noted that, when said composition is administered to an olive plant in specific ways, it is possible to significantly reduce the phenomenon of ovarian abortion and thus increase the productivity thereof.

The Applicant has also found that such composition has a further advantageous effect, pushing the olive tree plant to emit a larger amount of flowers, at the same time making the productive sprigs grow, slowing down their senility and, therefore, allowing the plant to have greater production constancy.

Preferably, the composition according to the present invention comprises, with respect to the sum of the weight of alpha-naphthylacetic acid, N-acetyl thiazolidine-4-carboxylic acid, thiazolidine-4-carboxylic acid, and of the at least one boron source:
- from 0.05% to 0.5% by weight of alpha-naphthylacetic acid;
- from 12.5% to 30% by weight of N-acetyl thiazolidine-4-carboxylic acid;
- from 12.5% to 30% by weight of thiazolidine-4-carboxylic acid; and
- at least one boron source, in an amount from 35% to 72% by weight of boron.

In fact, the Applicant has found that said specific quantities of said components enable better results to be obtained in terms of reduction of the phenomenon of ovarian abortion and increase in the productivity of the olive tree plants, to which the composition according to the present invention is administered.

In a preferred embodiment, the composition according to the present invention is in the form of an aqueous solution.

In a further aspect, therefore, the present invention relates to a method for the treatment of at least one olive tree plant, comprising at least three administrations of the composition according to the present invention on at least a part of said at least one olive tree plant.

The Applicant succeeded, thanks to the method according to the present invention, in obtaining a significant reduction in the phenomenon of ovarian abortion in olive tree plants, thus increasing the productivity of said plants.

In a preferred embodiment of the method according to the present invention, the composition according to the present invention is administered in the form of an aqueous solution.

The method according to the present invention enables, through the use of the composition according to the present invention, ovarian abortion to be reduced and the production of olives in olive tree plants to be increased.

Therefore, the present invention relates, in further aspects thereof, to the use of the composition according to the present invention for the reduction of ovarian abortion in olive plants and for the increase in production of olives in olive tree plants.

### DETAILED DESCRIPTION OF THE INVENTION

The present invention relates in a first aspect thereof to a composition comprising alpha-naphthylacetic acid, N-acetyl thiazolidine-4-carboxylic acid, thiazolidine-4-carboxylic acid, and at least one boron source.

In fact, the Applicant has surprisingly found that, by administering such a composition to an olive tree plant, it is possible to significantly reduce the phenomenon of ovarian abortion of the olive tree plant itself, thus increasing the productivity thereof.

Without necessarily being constrained to a specific theory, the Applicant believes that the specific combination of alpha-naphthylacetic acid, N-acetyl thiazolidine-4-carboxylic acid, thiazolidine-4-carboxylic acid, and at least one boron source of the composition according to the present invention provides the olive tree plant to which said composition is administered with elements and substances able to reduce the presence, during the phenological stage of flowering, of flowers with absent or partially developed ovaries or however not functional, which are not able to transform into fruit and destined not to contribute to the production of olives, and therefore of oil.

The present invention can be presented in one or more of its aspects or one or more of the preferred characteristics reported below, which can be combined with one another according to the application requirements.

Within the context of the present description and following claims, all the numerical magnitudes indicating quantities, parameters, percentages, and so on are to be considered preceded in every circumstance by the term "about" unless indicated otherwise. Further, all the ranges of numerical magnitudes include all the possible combinations of maximum and minimum numerical values and all the possible intermediate ranges, as well as those indicated below.

In the present invention the expression:
- "olive tree plant" means a plant of the oleaceae family, of the Olea europaea L., 1753 variety;
- "phenological stage" means a morphological, physiological, functional and behavioural status of a living organism such as, for example, a plant, induced by the seasonal mutation of the environmental conditions, in particular the climatic ones;
- "inflorescence" means the phenological stage of the olive tree plant in which from the flower gems and, where present, the mixed ones, the inflorescences are formed and developed. Typically although with variability due to the variety of olive tree plant grown, the growing area and the weather and climatic conditions of the reference year - the inflorescence stage takes place, in the northern hemisphere and in the geographical area around the Mediterranean Sea, between the months of March and April;
- "flowering" means the phenological stage of the olive tree plant that goes from the opening of the flower buds to the dropping of the stamens and the petals. Typically although with variability due to the variety of olive tree plant grown, the growing area and the weather and climatic conditions of the reference year - the flowering stage takes place, in the northern hemisphere and in the geographical area around the Mediterranean Sea, between the months of April - June;
- "bud setting" means the phenological stage of the olive tree plant in which the ovary swells in the still persistent cup-shaped portion, and the presence of the brown stigma. Typically although with variability due to the variety of olive tree plant grown, the growing area and the weather and climatic conditions of the reference year - the setting stage takes place, in the northern hemisphere and in the geographical area around the Mediterranean Sea, between the months of April and June.
- "first fruit growth" means the phenological stage of the olive tree plant in which the cup falls and the drupes start to swell reaching a maximum diameter of about 3 millimetres. Typically although with variability due to the variety of olive tree plant grown, the growing area and the weather and climatic conditions of the reference year - the first fruit growth stage takes place, in the northern hemisphere and in the geographical area around the Mediterranean Sea, between the months of May and July.

In a preferred embodiment, the composition according to the present invention comprises a specific combination of specific quantities of alpha-naphthylacetic acid, N-acetyl thiazolidine-4-carboxylic acid, thiazolidine-4-carboxylic acid, and at least one boron source.

Preferably, the composition according to the present invention comprises, with respect to the sum of the weight of alpha-naphthylacetic acid, N-acetyl thiazolidine-4-carboxylic acid, thiazolidine-4-carboxylic acid, and of the at least one boron source:
- from 0.05% to 0.5% by weight of alpha-naphthylacetic acid;
- from 12.5% to 30% by weight of N-acetyl thiazolidine-4-carboxylic acid;
- from 12.5% to 30% by weight of thiazolidine-4-carboxylic acid; and
- at least one boron source, in an amount from 35% to 72% by weight of boron.

In fact, the Applicant has found that said specific quantities of said components enable better results to be obtained in terms of reduction of the phenomenon of ovarian abortion and increase in the productivity of the olive tree plants, to which the composition according to the present invention is administered.

Preferably, the composition according to the present invention comprises from 0.075% to 0.40% by weight, preferably from 0.085% to 0.30% by weight, even more preferably from 0.10% to 0.20% by weight, and even more preferably from 0.11% to 0.15% by weight of alpha-naphthylacetic acid with respect to the sum of the weight of alpha-naphthylacetic acid, N-acetyl thiazolidine-4-carboxylic acid, thiazolidine-4-carboxylic acid, and at least one boron source.

In relation to N-acetyl thiazolidine-4-carboxylic acid, the composition according to the present invention comprises from 13% to 28% by weight, preferably from 15% to 27% by weight, even more preferably from 16% to 25% by weight, and even more preferably from 18% to 22% by weight of N-acetyl thiazolidine-4-carboxylic acid with respect to the sum of the weight of alpha-naphthylacetic acid, N-acetyl thiazolidine-4-carboxylic acid, thiazolidine-4-carboxylic acid, and at least one boron source.

Preferably, the composition according to the present invention comprises from 13% to 28% by weight, preferably from 15% to 27% by weight, even more preferably from 16% to 25% by weight, and even more preferably from 18% to 22% by weight of thiazolidine-4-carboxylic acid with respect to the sum of the weight of alpha-naphthylacetic acid, N-acetyl thiazolidine-4-carboxylic acid, thiazolidine-4-carboxylic acid, and at least one boron source.

The composition according to the present invention comprises at least one boron source, in an amount from 35% to 72% by weight of boron, with respect to the sum of the weight of alpha-naphthylacetic acid, N-acetyl thiazolidine-4-carboxylic acid, thiazolidine-4-carboxylic acid, and at least one boron source.

The boron source that can be used in the composition according to the present invention is any compound containing at least one boron atom and known to an expert in the field of products for treating plants, and in particular olive plants.

The amount of the at least one boron source in the composition according to the present invention therefore refers to the percentage by weight of the boron effectively present in the composition according to the present invention, not to the percentage by weight of the boron source, i.e. the compound containing at least one boron atom. An expert in the field, knowing the boron content of the compound containing at least one boron atom intended to be used, is therefore perfectly able to determine the necessary amount to bring the desired amount of boron into the composition according to the present invention.

Preferably, the composition according to the present invention comprises at least one boron source, in an amount from 40% to 68% by weight of boron, more preferably in an amount from 45% to 66% by weight of boron, even more preferably in an amount from 50% to 64% by weight of boron, and even more preferably in an amount from 56% to 62% by weight of boron, with respect to the sum of the weight of alpha-naphthylacetic acid, N-acetyl thiazolidine-4-carboxylic acid, thiazolidine-4-carboxylic acid, and at least one boron source.

Examples of compounds containing at least one boron atom known for this purpose to an expert in the field are: boron complexed with ethanolamine and elementary boron.

Preferably, said at least one boron source is boron complexed with ethanolamine.

In a particularly preferred embodiment, the composition according to the present invention comprises, with respect to the sum of the weight of alpha-naphthylacetic acid, N-acetyl thiazolidine-4-carboxylic acid, thiazolidine-4-carboxylic acid, and of the at least one boron source.
- 0.13 % by weight of alpha-naphthylacetic acid;
- 20.2% by weight of N-acetyl thiazolidine-4-carboxylic acid;
- 20.2% by weight of thiazolidine-4-carboxylic acid; and
- boron complexed with ethanolamine, in the amount of 59.4% by weight of boron.

In addition to the components mentioned above, the composition according to the present invention may contain one or more components selected from: L-amino acids and carbon sources.

Preferably, the composition according to the present invention comprises at least one further component selected in the group that consists of L-amino acids and organic carbon sources.

Preferably, the composition according to the present invention comprises from 50% to 200% by weight of at least one L-amino acid, with respect to the sum of the weight of alpha-naphthylacetic acid, N-acetyl thiazolidine-4-carboxylic acid, thiazolidine-4-carboxylic acid, and of the at least one boron source.

Preferably, the composition according to the present invention comprises at least one organic carbon source, in an amount from 100% to 400% by weight of organic carbon, with respect to the sum of the weight of alpha-naphthylacetic acid, N-acetyl thiazolidine-4-carboxylic acid, thiazolidine-4-carboxylic acid, and at least one boron source.

The organic carbon source that can be used in the composition according to the present invention is any compound containing at least one organic carbon atom and known to an expert in the field of products for treating plants, and in particular olive plants.

As for the at least one boron source, the quantity of the at least one organic carbon source therefore refers to the percentage by weight of the organic carbon effectively present in the composition according to the present invention, not to the percentage by weight of the organic carbon source, i.e. the compound containing at least one atom of organic carbon. Also in this case, an expert in the field, knowing the organic carbon content of the compound containing at least one atom of organic carbon intended to be used, is therefore perfectly able to determine the necessary quantity to bring the desired quantity of organic carbon into the composition according to the present invention.

Although the components that provide boron, i.e. the at least one source of boron, organic carbon, or the at least one source of organic carbon, and nitrogen, or the at least one source of nitrogen, are described in the present application as distinct components, the present invention also covers embodiments in which a compound constitutes at the same time a source of boron and organic carbon, a source of boron and nitrogen, a source of organic carbon and nitrogen, a source of boron, organic carbon and nitrogen.

In a preferred embodiment, the composition according to the present invention is in the form of an aqueous solution.

The composition according to the present invention can be prepared according to any method known to an expert in the field of products for treating plants, and in particular olive tree plants.

For example, the composition according to the present invention can be prepared in aqueous solution form by providing a suitable quantity of water and dissolving in said quantity of water the suitable quantities of alpha-naphthylacetic acid, N-acetyl thiazolidine-4-carboxylic acid, thiazolidine-4-carboxylic acid, and at least one boron source. In this regard, the skilled person can establish whether to add all the components together or one at a time.

The Applicant has surprisingly found that by administering the composition according to the present invention to an olive tree plant, preferably in the form of an aqueous solution, it is possible to significantly reduce the phenomenon of ovarian abortion of said plant, thus increasing productivity.

In a further aspect, therefore, the present invention relates to a method for the treatment of at least one olive tree plant, comprising at least three administrations of the composition according to the present invention on at least a part of said at least one olive tree plant.

In fact, the Applicant succeeded, thanks to the method according to the present invention, in obtaining a significant reduction in the phenomenon of ovarian abortion in olive tree plants, thus increasing the productivity of said plants.

Advantageously, the method according to the present invention is associated with other traditional treatments normally adopted by experts in the field of caring for olive tree plants, such as fertilization treatments, for providing nutritious substances, or phytosanitary treatments, adapted to protect or preserve the plant (or its products) or influence the vital processes (growth, etc.).

Preferably, in the method according to the present invention, the first of said at least three administrations is performed at the phenological stage of the start of inflorescence of said at least one olive tree plant.

Preferably, in the method according to the present invention, the second of said at least three administrations is performed at the phenological stage of flowering of said at least one olive tree plant.

Preferably, in the method according to the present invention, the third of said at least three administrations is performed at the phenological stage of first fruit growth of said at least one olive tree plant.

The method according to the present invention can be advantageously used for the treatment of an olive tree plant, from its transplanting in the olive grove.

A skilled person is normally able to identify the most suitable quantity of composition according to the invention to be used, considering the age of the plant to be treated, its size, the other treatment conditions, such as fertilization, pruning and any phytosanitary treatments adopted on the pre-selected plant.

In a preferred embodiment of the method according to the present invention, the composition according to the present invention is administered to at least one olive tree plant in the form of an aqueous solution.

In a further preferred embodiment of the method according to the invention, when the composition according to the present invention is administered in the form of an aqueous solution, said aqueous solution comprises, with respect to the total weight of the aqueous solution:
- from 9.2*10⁻⁶ % to 9.2*10⁻⁵ % by weight of alpha-naphthylacetic acid;
- from 2.3*10⁻³% to 5.5*10⁻³% by weight of N-acetyl thiazolidine-4-carboxylic acid;
- from 2.3*10⁻³% to 5.5*10⁻³% by weight of thiazolidine-4-carboxylic acid; and
- at least one boron source, in an amount from 6.5*10⁻³% to 0.013% by weight of boron. Preferably, when in the method according to the present invention the composition according to the present invention is administered in the form of an aqueous solution having said concentrations, in each of said at least three administrations a quantity of said aqueous solution comprised between 1 and 8 litres is administered for said at least one olive tree plant, more preferably between 1 and 5 litres for said at least one olive tree plant.

Within said interval, a skilled person is normally able to identify the most suitable quantity of aqueous solution to be used, considering the age of the plant to be treated, its size, the other treatment conditions, such as fertilization, pruning and any phytosanitary treatments adopted on the pre-selected plant.

Preferably, in the method according to the present invention said at least one part of said at least one olive tree plant is the crown of said at least one olive tree plant.

Preferably, in the method according to the present invention at least one of said at least three administrations is performed by atomizing said composition according to the present invention, more preferably when said composition is in aqueous solution form.

The method according to the present invention enables, through the use of the composition according to the present invention, ovarian abortion in olive tree plants to be reduced and the production of olives in olive tree plants to be increased.

Therefore, the present invention relates, in further aspects thereof, to the use of the composition according to the present invention for the reduction of ovarian abortion in olive plants and for the increase in production of olives in olive tree plants.

### EXPERIMENTAL PART

The invention is now described by means of some examples to be considered for non-limiting illustrating purposes thereof.

### Examples

### EXAMPLE 1

In a container with a useful volume of 150 I, 100 I of water, 40 ml of a 0.6 g/l aqueous solution of alpha-naphthylacetic acid, 150 ml of a 2.5% by weight aqueous solution of N-acetyl thiazolidine-4-carboxylic acid, 150 ml of a 2.5% by weight aqueous solution of thiazolidine-4-carboxylic acid and 100 ml of an aqueous solution of boron complexed with ethanolamine containing 11% by weight of boron were poured, mixing until complete dissolution of all the components.

The aqueous solution thus obtained was kept at 25°C until it was used.

### EXAMPLE 2

In a container with a useful volume of 150 I, 100 I of water, 40 ml of a 0.6 g/l aqueous solution of alpha-naphthylacetic acid, 150 ml of a 2.5% by weight aqueous solution of N-acetyl thiazolidine-4-carboxylic acid, 150 ml of a 2.5% by weight aqueous solution of thiazolidine-4-carboxylic acid and 100 ml of an aqueous solution of boron complexed with ethanolamine containing 11% by weight of boron, 200 ml of Basfoliar avant natur SL foliar fertilizer (sold by Compo Expert, composition: 37.3% Total organic substance; 21.6% Total organic carbon; 10.3% of free L-amino acids: 19% L-glycine, 10% L-glutamic acid, 8% L-proline, 1% L-methionine, 1% L-tryptophan) mixing until complete dissolution of all the components.

### EXAMPLE 3

For the purpose of demonstrating the performance levels of the composition according to the present invention, a field test lasting two years was then carried out, verifying the increase in productivity of an olive grove when treated with the aqueous solution according to Example 1.

For the field test, two groups of 30 olive tree plants, each of variety Frantoio, Leccino and Pendolino, aged 33 years within an olive grove located in Colle val d'Elsa, Siena, were selected. The first group of 30 plants was treated, each year performing three administrations configured as follows:
- 60 litres of an aqueous solution according to Example 1, atomized onto the crown of the plants during the start of inflorescence phenological stage (in the month of April);
- 60 litres of an aqueous solution according to Example 1, atomized onto the crown of the plants during the flowering phenological stage (in the month of May); and
- 60 litres of an aqueous solution according to Example 1, atomized onto the crown of the plants during the start of fruit growth phenological stage (in the month of June).

The second group of 30 plants did not undergo any treatment with the aqueous solution according to Example 1.

Between the first and the second group of 30 plants all the other growing parameters were kept unaltered for the entire duration of the field test, such as fertilization, pruning and treatment of any diseases on the olive tree plants, such as not to alter the growing conditions.

The following parameters were assessed:
- Variation of the extent of ovarian abortion: this was determined in correspondence with the phenological stage of bud setting of the plant by calculating the ratio between the number of flowers with absent ovaries and the total number of flowers (with and without ovaries) in at least 3 branches of the crown of each plant treated with the aqueous solution according to Example 1, calculating the same ratio in at least 3 branches of the crown of each plant not treated with the aqueous solution according to Example 1 and, determining the percentage variation of ovarian abortion found in the first group (treated with the aqueous solution according to Example 1), with respect to the second group (not treated).
- Variation in quantity of olives produced: this was determined by measuring the total weight of the olives produced by each of the two groups and determining the percentage variation of the quantity of olives produced found in the first group (treated with the aqueous solution according to Example 1), with respect to the second group (not treated).

The results obtained are reported in Table 1.

**TABLE 1**

| | Variation of the extent of ovarian abortion with respect to the group of plants not treated (%) | Variation in quantity of olives produced with respect to the group of plants not treated (%) |
|---|---|---|
| First year | -50% | + 40% |
| Second year | -50% | + 40% |

From the data obtained and reported in Table 1, it is possible to observe that the composition according to the present invention, when administered to an olive tree plant, is able to significantly reduce the phenomenon of ovarian abortion and thus increase productivity.

### EXAMPLE 4

For the purpose of demonstrating the performance levels of the composition according to the present invention, a field test lasting two years was then carried out, verifying the increase in productivity of an olive grove when treated with the aqueous solution according to Example 1.

For the field test, a set of olive tree plants of Frantoio, Leccino, Moraiolo, and Pendolino variety, 30 years old, within an olive grove located in Castellina in Chianti, Siena, was selected. The group of plants was split into two groups. The first group consisting of 100 plants was treated, each year performing three administrations configured as follows:
- 200 litres of an aqueous solution according to Example 1, atomized onto the crown of the plants during the start of inflorescence phenological stage (in the month of April);
- 200 litres of an aqueous solution according to Example 1, atomized onto the crown of the plants during the flowering phenological stage (in the month of May); and
- 200 litres of an aqueous solution according to Example 1, atomized onto the crown of the plants during the start of fruit growth phenological stage (in the month of June).

The second group, also consisting of 100 plants, did not undergo any treatment with the aqueous solution according to Example 1.

Between the first and the second group of plants all the other growing parameters were kept unaltered for the entire duration of the field test, such as fertilization, pruning and treatment of any diseases on the olive tree plants, such as not to alter the growing conditions.

The following parameters were assessed: Variation in the entity of ovarian abortion and Variation in quantity of olives produced according to the results of Example 3.

The results obtained are reported in Table 2.

**TABLE 2**

| | Variation of the extent of ovarian abortion with respect to the group of plants not treated (%) | Variation in quantity of olives produced with respect to the group of plants not treated (%) |
|---|---|---|
| First year | -50% | + 50% |
| Second year | -50% | + 40% |

From the data obtained and reported in Table 2, it is possible to observe that the composition according to the present invention, when administered to an olive tree plant, is able to significantly reduce the phenomenon of ovarian abortion and thus increase productivity.

### EXAMPLE 5

For the purpose of demonstrating the performance levels of the composition according to the present invention in the long term and in particular demonstrating that the use thereof does not jeopardize the wellbeing of the plant, a field test was performed for 4 years, verifying the maintenance of greater productivity of an olive grove when treated with the aqueous solution according to Example 1, with respect to the previous years in which the same olive grove had not been treated.

The field test was performed within an olive grove located in Casole d'Elsa, Siena and consisting of 35 olive tree plants of the Frantoio, Leccino and Pendolino varieties aged 34 years, in which over the course of the 4 years prior to the test the historical ovarian abortion data and olive production data were recorded. All the plants in the olive grove were therefore treated with:
- 150 litres of an aqueous solution according to Example 1, atomized onto the crown of the plants during the start of inflorescence phenological stage (in the month of April);
- 150 litres of an aqueous solution according to Example 1, atomized onto the crown of the plants during the flowering phenological stage (in the month of May); and
- 150 litres of an aqueous solution according to Example 1, atomized onto the crown of the plants during the start of fruit growth phenological stage (in the month of June).

The following parameters were assessed: Variation in the entity of ovarian abortion and variation in quantity of olives produced with the same methodology reported in Example 3, comparing the data obtained following the treated with the average data recorded in the 4 years prior to treatment.

The results obtained are reported in Table 3.

**TABLE 3**

| | Variation in entity of ovarian abortion with respect to the period prior to treatment (%) | Variation in quantity of olives produced with respect to the period prior to treatment (%) |
|---|---|---|
| First year of treatment | -30% | +20% |
| Second year treatment | -40% | +30% |
| Third year of treatment | -50% | +50% |
| Fourth year of treatment | -50% | +50% |

From the data obtained and reported in Table 3, it is possible to observe that the composition according to the present invention, when administered to an olive tree plant, is able to significantly reduce the phenomenon of ovarian abortion and thus increase productivity over time, without jeopardizing the wellbeing of the plant.

## Claims

1. A composition comprising alpha-naphthylacetic acid, N-acetyl thiazolidine-4-carboxylic acid, thiazolidine-4-carboxylic acid, and at least one boron source.

2. The composition according to claim 1, comprising, with respect to the sum of the weight of alpha-naphthylacetic acid, N-acetyl thiazolidine-4-carboxylic acid, thiazolidine-4-carboxylic acid, and of the at least one boron source:
- from 0.05% to 0.5% by weight of alpha-naphthylacetic acid;
- from 12.5% to 30% by weight of N-acetyl thiazolidine-4-carboxylic acid;
- from 12.5% to 30% by weight of thiazolidine-4-carboxylic acid; and
- at least one boron source, in an amount from 35% to 72% by weight of boron.

3. The composition according to claims 1 or 2, comprising from 50% to 200 % by weight of at least one L-amino acid, with respect to the sum of the weight of alpha-naphthylacetic acid, N-acetyl thiazolidine-4-carboxylic acid, thiazolidine-4-carboxylic acid, and of the at least one boron source.

4. The composition according to any one of claims from 1 to 3, comprising at least one organic carbon source in an amount from 100% to 400% by weight of organic carbon, with respect to the sum of the weight of alpha-naphthylacetic acid, N-acetyl thiazolidine-4-carboxylic acid, thiazolidine-4-carboxylic acid, and of the at least one boron source.

5. The composition according to any one of claims from 1 to 4, in form of aqueous solution.

6. A method for the treatment of at least one olive tree plant, comprising at least three administrations of the composition according to any one of claims from 1 to 5 on at least one part of said at least one olive tree plant.

7. The method according to claim 6, wherein the first of said at least three administrations is made at the phenological stage of inflorescence of said at least one olive tree plant.

8. The method according to claim 6 or 7, wherein the second of said at least three administrations is made at the phenological stage of flowering of said at least one olive tree plant.

9. The method according to any one of claims from 6 to 8, wherein the third of said at least three administrations is made at the phenological stage of first fruit growth of said at least one olive tree plant.

10. The method according to any one of claims from 6 to 9, wherein said composition is administered in aqueous solution form.

11. The method according to any one of claims from 6 to 10, wherein said at least one part of said at least one olive tree plant is the crown of said at least one olive tree plant.

12. Use of the composition according to any one of claims from 1 to 5, for the reduction of the ovarian abortion in olive tree plants.

13. Use of the composition according to any one of claims from 1 to 5, for the increase in olive production in olive tree plants.
